## Europäisches Patentamt

## European Patent Office

## Office européen des brevets

(19)

(11) Veröffentlichungsnummer: **0 129 016**
**B1**

(12) # EUROPÄISCHE PATENTSCHRIFT

(45) Veröffentlichungstag der Patentschrift:
**13.08.86**

(21) Anmeldenummer: **84104267.4**

(22) Anmeldetag: **14.04.84**

(51) Int. Cl.⁴: **C 08 L 21/00,** C 08 L 9/00,
C 08 L 9/02, C 08 L 9/06,
C 08 L 65/00, B 32 B 25/04

(54) **Verbundmaterialien und Verbundkonstruktionselemente auf Basis von EP(D)M.**

(30) Priorität: **11.06.83 DE 3321176**

(43) Veröffentlichungstag der Anmeldung:
**27.12.84 Patentblatt 84/52**

(45) Bekanntmachung des Hinweises auf die Patenterteilung:
**13.08.86 Patentblatt 86/33**

(84) Benannte Vertragsstaaten:
**BE CH DE FR GB IT LI NL SE**

(56) Entgegenhaltungen:
**FR-A-2 142 990**
**GB-A-1 366 645**
**US-A-3 653 423**

**KAUTSCHUK + GUMMI-KUNSTSTOFFE, Jahrgang 36, Nr. 12, Dezember 1983, Seiten 1037-1043, Heidelberg, DE; A. DRÄXLER: "Die Stellung der Polyoctenamere unter den technisch genutzten Kautschuken"**
**KAUTSCHUK + GUMMI-KUNSTSTOFFE, Jahrgang 34, Nr. 3, März 1981, Seiten 185-190, Heidelberg, DE; A. DRÄXLER: "Trans-Polyoctenamer"**

(73) Patentinhaber: **HÜLS AKTIENGESELLSCHAFT, Patentabteilung / PB 15 - Postfach 13 20, D-4370 Marl 1 (DE)**

(72) Erfinder: **Dräxler, Adolf, Hervester Strasse 6, D-4370 Marl (DE)**

**Beschreibung**

Verbundmaterialien und Verbundkonstruktionselemente auf Basis von EP(D)M sind bekannt. Sie weisen in der Regel drei Lagen auf:

1. eine Lage auf Basis von EP(D)M; sie ist hitze- und ozonbeständig und gegen polare, organische Medien quellbeständig;

2. eine Lage auf Basis einer Kautshukkomponente, welche dieser Lage eine gewünschte Eigenschafte, wie beispielsweise Flammwidrigkeit oder Quellbeständigkeit gegen unpolare, organische Medien, verleiht;

3. eine Zwischenlage auf Basis einer Kautschukkomponente, welche eine gute Fähigkeit zur Covulkanisation mit EP(D)M einerseits und der Kautschukkomponente der anderen Lage andererseits aufweist, oder eine Gewebezwischenlage.

Die Verbundmaterialien und Verbundkonstruktionselemente des Standes der Technik weisen zwar eine gute Festigkeit der durch Vulkanisationsverschweißung erhaltenen Lagenbindung auf. Ihre Herstellung ist jedoch wegen des Erfordernisses der Zwischenlage umständlich und daher aufwendig.

Die Aufgabe bestand darin, Verbundmaterialien, und Verbundkonstruktionselemente auf Basis von EP(D)M bereitzustellen, welche auf vereinfachte Weise, d.h. ohne eine, den Verbund bewirkende Zwischenlage, erhalten sind, und eine gute Festigkeit der durch Vulkanisationsverscheißung erhaltenen Lagenbindung aufweisen.

Die Aufgabe wurde in überraschender Weise wie in den Patentansprüchen 1 und 2 angegeben gelöst.

D in EPDM kann für Ethylidennorbornen, Hexadien-1, 4 oder Dicyclopentadien als Terkomponente stehen.

Das EP(D)M kann als amorpher Typ, Sequenz-Typ oder gemischeter Typ vorliegen. Beispiele für Dien-Kautschuke sind NR, IR, BR, CR und Dien-Copolymerisate, wie 1,3-Butadien/Isopren-Copolymerisate.

IR, BR, SBR, NBR und CR können in üblicher Weise modifiziert sein, indem die ihnen zugrunde liegenden Makromoleküle Wiederholungseinheiten aufweisen, welche durch Polymerisation von üblichweise in Betracht kommenden, copolymerisierbaren Comonomeren (Modifizierungskomponenten) erhalten sind.

Der Polyoctenylen-Kautschuk kann überwiegend trans-Doppelbindungen (TOR; die handelsüblichen Typen weisen 80 oder 62% trans-Doppelbindungen auf- oder überwiegend cis-Doppelbindungen (COR) aufweisen.

Die Polyoctenylenkautschuke mit unterschiedlichen Anteilen an cis- und trans-Doppelbindungen, d.h. unterschiedlichen Gehalten an cis- und trans-Octenyleneinheiten, sowie unterschiedlichen J-Werten und dementsprechend unterschiedlichen Molekulargewichten sind durch literaturbekannte Verfahren erhältlich.

. Unter Vulkanisationsmitteln werden die bekannten Vulkanisationssystem verstanden. Ein bevorzugtes Vulkanisationssystem enthält Schwefel in Kombination mit den üblichen Beschleunigern. Ein weiteres bevorzugtes Vulkanisationssystem enthält ein übliches Peroxid. Die Menge des Vulkanisationsmittels richtet sich nach den jeweiligen Erfordernissen und kann durch einfache, orientierende Versuche leicht ermittelt werden.

Die Zusatzstoffe sind beispielsweise übliche Füllstoffe, sei es aktive, verstärkende Füllstoffe, wie Ruße unterschiedlicher Aktivität und aktive Kieselsäuren, oder inaktive Füllstoffe, wie Kreiden und Silikate, übliche Weichmacheröle, wie aromatische, aliphatische und naphthenische Kohlenwasserstoffe, und übliche Hilfsmittel, wie Alterungsschutzmittel, Ozonschutzwachse, Gleitmittel und die Konfektionsklebrigkeit bewirkende Harze.

Polyoctenylen-Kautschuke sind gut verträglich mit anderen Kautschuken. Sie verbessern die Phasendispersität in Verschnitten aus wenig verträglichen Kautschuken, d.h. sie vergrößern die spezifische Phasengrenzfläche. Sie verbessern dabei in der Regel auch die Covulkanisation der wenig verträglichen Kautschuke. Sie verbessern in der Regel die Hitze; und UV-Beständigkeit der mit ihnen hergestellten Vulkanisate (Lage gemäß den Merkmalen 2 und 3, Patentanspruch 1).

Zur Herstellung der Vulkanisierbaren Massen aus den Mischungskomponenten und zu ihrer Weiterverarbeitung zu Verbundmaterialien und Verbundkonstruktionselementen, d. h. zu den Vulkanisaten, können die in der Gummiindustrie üblichen Misch-, Verformungs- und Vulkanisationsanlagen dienen, wie beispielsweise Innenmischer, Walzwerke, Extruder, Kalander, Spritzgießeinrichtungen, Vulkanisationspressen und kontinuierlich arbeitende Vernetzungsanlagen.

Die Erfindung wird durch die folgenden Beispiele erläutert. Darin bedeuten Teile (T.) Massenteile.

Die nicht erfindungsgemäßen Vergliechsbeispiele werden mit großen Buchstaben bezeichnet.

Der eingesetzte, handelsübliche Polyoctenylen-Kautschuk hat einen Anteil an trans-Doppelbindungen von 62%. Sein J-Wert ist 130 cm³/g (130 ml/g).

Das eingesetzte EPDM ist ein amorpher Typ. D steht für Ethylidennorbornen (14 Doppelbindungen/1 000 C-Atome). Seine Mooney-Viskosität ($ML_{1+4}$, 100°C, DIN 53 523) ist 90.

Das eingesetzte EPM ist ein amorpher Typ mit der Mooney-Viskosität 70.

Das eingesetzte NBR ist ein handelsüblicher Typ (Massenverhältnis Acrylnitril/1,3-Butadien: 27/72; Mooney-Viskosität: 65).

Das eingesetzte, handelsübliche CM enthält 36 Massen-% Cl. Seine Mooney-Viskosität ist 30.

Beispiele A und 1

Die Lage I wurde aus einer vulkanisierbaren Masse (Compound) entsprechend der folgenden Rezeptur erhalten:

100 T. EPDM
5 T. Zinkoxid

1 T. Stearinsäure
60 T. Ruß N 550
20 T. paraffinisches Öl
1,5 T. Schwefel
0,5 T. Mercaptobenzthiazol
0,6 T. Tetramethylthiuramidsulfid
1,0 T. Zinkdibutyldithiocarbamat

Die Lage II wurde aus den Compounds entsprechend den folgenden Rezepturen erhalten:

|  | Beispiel A | Beispiel 1 |
|---|---|---|
| NR (smoked sheets) | 100 T. | 80 T. |
| Polyoctenylen-Kautschuk | — | 20 T. |
| Zinkoxid | 5 T. | 5 T. |
| Stearinsäure | 2 T. | 2 T. |
| Ruß N 550 | 50 T. | 50 T. |
| 2,2'-Methylen-bis-(4-methyl-6-tert.-butyphenol) | 0,5 T | 0,5 T. |
| Schwefel | 2,5 T. | 2,5 T. |
| Benzothiazyl-2-cyclohexylsulfenamid | 0,8 T. | 0,8 T. |
| Tetramethylthiurammonosulfid | 0,05 T. | 0,12 T. |

Die lagen waren jeweils 4 mm dick.

Die Lagen I und II wurden jeweils unter den Vernetzungsbedingungen 15 min/160°C miteinander verschweißt. Aus den so erhaltenen Platten wurden die Probekörper A und 1 mit den Maßen 25×150×8 mm herausgeschnitten. Sie wurden durch den Schältest gemäß DIN 53 539 charakterisiert. Die zur Trennung der Lagen erforderliche Separationskraft [N/mm Probenbreite] betrug:

Probekörper A: 1,5 N/mm
Probekörper 1: 4,0 N/mm

Beispiele B und 2
Lage I wie bei den Beispielen A und 1.
Die Lage II wurde aus den Compounds entsprechend den folgenden Rezepturen erhalten:

|  | Beispiel B | Beispiel 2 |
|---|---|---|
| NBR | 100 T. | 80 T. |
| Polyoctenylen-Kautschuk | — | 20 T. |
| Zinkoxid | 5 T. | 5 T. |
| Stearinsäure | 1,5 T. | 1,5 T. |
| Ruß N 550 | 50 T. | 50 T. |
| aromatisches Öl | 10 T. | 10 T. |
| Schwefel | 2 T. | 2 T. |
| Benzothiazyl-2-cyclohexylsulfenamid | 1,6 T. | 1,6 T. |
| Tetramethylthiurammonosulfid | 0,1 T. | 0,15 T. |

Die wie bei den obigen Beispielen erhaltenen Probekörper ergaben im Schältest folgende Werte:

Probekörper B: 0,2 N/mm
Probekörper 2: 4,1 N/mm

Beispiele C und 3
Die Lage I wurde aus dem Compound entsprechend der folgenden Rezeptur erhalten:

100 T. EPM
5 T. Zinkoxid
1 T. Stearinsäure
60 T. Ruß N 550
20 T. paraffinisches Öl
1 T. polymeres 1,2-Dihydro-2,2,4-trimethylchinolin
6 T. 1,3-Bis-(tert.butylperoxyisopropyl)-benzol

Die Lage II wurde aus den Compounds entsprechend den folgenden Rezepturen erhalten:

|  | Beispiel C | Beispiel 3 |
|---|---|---|
| NBR | 100 T. | 80 T. |
| Polyoctenylen-Kautshuk | — | 20 T. |
| Zinkoxid | 5 T. | 5 T. |
| Stearinsäure | 0,5 T. | 0,5 T. |
| Ruß N 550 | 50 T. | 50 T. |
| naphthenisches Öl | 5 T. | 5 T. |
| polymeres 1,2-Dihydro-2,2,4-trimethylchinolin | 1 T. | 1 T. |
| 1,3-Bis-(tert.-butylperoxyisopropyl)-benzol | 4,5 T. | 4,5 T. |

Die wie bei den obigen Beispielen erhaltenen Probekörper ergaben im Schältest folgende Werte:

Probekörper C: 2,9 N/mm
Probekörper 3: 12,8 N/mm

Beispiele D und 4

Lage I wie bei den Beispielen C und 3.

Die Lage II wurde aus den Compounds entsprechend den folgenden Rezepturen erhalten:

|  | Beispiel D | Biespiel 4 |
|---|---|---|
| CM | 100 T. | 80 T. |
| Polyoctenylen-Kautschuk | — | 20 T. |
| Magnesiumoxid | 5 T. | 5 T. |
| Ruß N 550 | 50 T. | 50 T. |
| 1,3-Bis-(tert.-butylperoxyisopropyl)-benzol | 5 T. | 5 T. |
| Triallylcyanurat | 1,5 T. | 1,5 T. |

Die wie bei den obigen Beispielen erhaltenen Probekörper ergaben im Schältest folgende Werte:

Probekörper D: 2,9 N/mm
Probekörper 4: 4,9 N/mm

**Patentansprüche**

1. Verbundmaterialien und Verbundkonstruktionselemente aus Lagen, welche aus vulkanisierbaren Massen mit unterschiedlicher Kautschukkomponente erhalten sind, wobei

1 eine Lage aus einer Masse erhalten ist, bestehend aus EP(D)M als Kautschukkomponente, einer wirksamen Menge eines Vulkanisationsmittels und üblichen Zusatzstoffen, und

2 die angrenzede Lage aus einer Masse erhalten ist, bestehend aus einem Kautschuk oder mehreren Kautschuken aus der Gruppe der Dien-Kautschuke, SBR, NBR and CM als Kautschukkomponente, einer wirksamen Menge eines Vulkanisationsmittels und üblichen Zusatzstoffen,

dadurch gekennzeichnet, daß

3 die Kautschukkomponente gemäß Merkmal 2 aus 5 bis 50 Massen-% eines Polyoctenylen-Kautschuks mit einer Viskositätszahl (J-Wert) von 40 bis 350 cm$^3$/g, gemessen bei 25°C in Toluol in einer Konzentration von 0,5% (Masse/Volumen der Lösung), und

50 bis 95 Massen-% eines Kautschuks oder mehrerer Kautschuke aus der Gruppe der Dien-Kautschuke, SBR, NBR und CM besteht.

2. Verbundmaterialien und Verbundkonstruktionselemente gemäß Anspruch 1, dadurch gekennzeichnet, daß

4 die Kautschukkomponente gemäß Merkmal 2 aus 10 bis 30 Massen-% eines Polyoctenylen-Kautschuks mit einem J-Wert von 80 bis 200 cm$^3$/g und 70 bis 90 Massen-% eines Kautschuks oder mehrerer Kautschuke aus der Gruppe der Dien-Kautschuke, SBR, NBR und CM besteht.

**Revendications**

1. Matériaux composites et éléments de construction composites formés de couches qui sont obtenues en partant de masses vulcanisables à constituant caoutchouc différent,

1 une couche ayant été obtenue en partant d'une masse formée d'EP(D)M en tant que constituant caoutchouc, d'une quantité efficace d'un agent de vulcanisation et d'additifs usuels, et

2 la couche adjacente ayant été obtenue en partant d'une masse formée d'un caoutchouc ou de plusieurs caoutchoucs du groupe des caoutchoucs de diène, du SBR, du NBR et du CM en tant que constituant caoutchouc, d'une quantité efficace d'un agent de vulcanisation et d'additifs usuels,

caractérisés par le fait que

3 le constituant caoutchouc selon la particularité 2 est formé de 5 à 50% en masse d'un caoutchouc de poly-octénylène ayant un indice de viscosité (valeur J) de 40 à 350 cm$^3$/g, mesuré à 25°C dans le toluène, à une concentration de 0,5% (masse/volume de la solution), et

de 50 à 95% en masse d'un caoutchouc ou de plusieurs caoutchoucs du groupe des caoutchoucs de diène, du SBR, du NBR et du CM.

2. Matériaux composites et éléments de construction composites selon la revendication 1, caractérisés par le fait que

4 le constituant caoutchouc selon la particularité 2 est constitué par 10 à 30% en masse d'un caoutchouc de polyocténylène ayant une valeur J de 80 à 200 cm$^3$/g et par 70 à 90% en masse d'un caoutchouc ou de plusieurs caoutchoucs du groupe des caoutchoucs de diène, du SBR, du NBR et du CM.

Claims

1. Composite materials and composite construction elements composed of layers which are obtained from vulcanisable masses with different rubber components,

1) one layer being obtained from a mass comprising EP(D)M as rubber component, an effective amount of a vulcanisation agent and conventional additive(s), and

2) the adjacent layer being obtained from a mass comprising one or more rubbers selected from diene rubbers, SBR, NBR and CM as rubber component, an effective amount of a vulcanisation agent and conventional additive(s),

characterised in that

3) the rubber component of feature 2) is composed of 5 to 50% by mass of a polyoctenylene rubber having a viscosity number (J-value) of 40 to 350 cm³/g, measured at 25°C in toluene at a concentration of 0.5% (mass/volume of solution), and

95 to 50% by mass of one or more rubbers selected from diene rubbers, SBR, NBR and CM.

2. Composite materials and composite construction elements according to claim 1, characterised in that

4) the rubber component of feature 2) is composed of 10 to 30% by mass of a polyoctenylene rubber having a J-value of 80 to 200 cm³/g and 90 to 70% by mass of one or more rubbers selected from diene rubbers, SBR, NBR and CM.